**Europäisches Patentamt**

**European Patent Office**

**Office européen des brevets**

(19)

(11) Numéro de publication: **0 211 762**
**B1**

(12) ## FASCICULE DE BREVET EUROPEEN

(45) Date de publication du fascicule du brevet:
**17.11.88**

(21) Numéro de dépôt: **86401716.5**

(22) Date de dépôt: **31.07.86**

(51) Int. Cl.⁴: **F 23 C 11/02**, F 28 F 27/00,
B 01 J 8/24, F 28 D 13/00,
F 23 N 3/00, F 22 B 31/00,
F 27 D 17/00

(54) Procédé et dispositif pour la régulation de l'énergie thermique échangée avec un lit fluidisé.

(30) Priorité: **05.08.85 FR 8511942**

(43) Date de publication de la demande:
**25.02.87 Bulletin 87/9**

(45) Mention de la délivrance du brevet:
**17.11.88 Bulletin 88/46**

(84) Etats contractants désignés:
**AT BE CH DE GB IT LI LU NL SE**

(56) Documents cités:
**WO - A - 80/02868**
**FR - A - 1 161 722**
**FR - A - 1 376 680**
**FR - A - 2 131 774**
**FR - A - 2 506 920**
**FR - A - 2 532 411**
**GB - A - 414 548**
**GB - A - 1 192 631**
**US - A - 2 674 612**
**US - A - 4 315 893**

**PATENTS ABSTRACTS OF JAPAN, vol. 8, no. 73
(M-287)[1510], 5 avril 1984; & JP-A-58 217 877 (RINNAI
K.K.) 17-12-1983**

(73) Titulaire: **CHARBONNAGES DE FRANCE, Etablissement
public dit:, Tour Albert 1er 65 avenue de Colmar,
F-92507 Rueil Malmaison Cédex (FR)**

(72) Inventeur: **Marlair, Guy, 160 rue Monsairat,
F-59500 Douai (FR)**

(74) Mandataire: **Chevallier, Robert Marie Georges et al,
Cabinet BOETTCHER 23, rue La Boétie, F-75008 Paris
(FR)**

## Description

L'invention a pour objet un procédé et un dispositif qui permettent de réguler avec facilité, dans une gamme de variation donnée, l'énergie thermique échangée entre un milieu extérieur et un lit fluidisé contenu dans une enceinte de fluidisation.

On sait que l'on utilise couramment des lits fluidisés pour la réalisation de réactions chimiques qui peuvent être endothermiques ou exothermiques. Certaines réactions comme la combinaison de l'oxygène avec un combustible sont fortement exothermiques et sont exécutées précisément en vue d'utiliser le flux calorifique ainsi produit. Toutefois, les besoins de l'utilisation ne sont pas constants; il est donc nécessaire de réguler la quantité de chaleur obtenue du lit fluidisé en fonction de la quantité de chaleur désirée. En sens inverse, pour l'entretien d'une réaction endothermique à un régime déterminé, il est nécessaire de réguler la quantité de chaleur fournie au lit fluidisé.

Cette variation commandée du flux de chaleur extrait du lit fluidisé ou apporté au lit fluidisé est ce que l'on appelle aussi la souplesse de marche du lit fluidisé.

L'échange de chaleur avec un lit fluidisé se réalise couramment au moyen d'un échangeur de chaleur de type tubulaire dont les tubes sont immergés dans le lit fluidisé.

On peut donner de la souplesse à la marche d'un lit fluidisé en agissant, isolément ou en combinaison, sur plusieurs facteurs qui sont, principalement:

— la vitesse de fluidisation,

— l'expansion plus ou moins importante du lit fluidisé,

— la variation de la densité apparente du lit fluidisé,

— la variation du degré d'immersion des tubes de l'échangeurs dans le lit fluidisé,

— la defluidisation partielle du lit réalisee par l'interruption de l'alimentation en gaz de fluidisation d'une partie de la grille de fluidisation.

Ces facteurs ne sont pas totalement indépendants les uns des autres. De plus, dans de nombreuses circostances et en particulier quand il s'agit de combustion en lit fluidisé, l'action sur certains facteurs est limitée par la nécessité de conserver des conditions favorables de fonctionnement si l'on veut maintenir à une valeur désirée certains paramètres comme le rendement thermique de la combustion ou la qualité de la désulfuration des gaz de combustion.

Il en résulte que la souplesse de marche ne s'obtient pas par action sur un seul facteur mais par une action partielle sur plusieurs facteurs dans la mesure où ceux-ci peuvent être modifiés.

Par exemple, un échangeur installé dans une enceinte de fluidisation a une surface d'échange donnée constante. Pour modifier le degré d'immersion de l'échangeur dans le lit fluidisé, on peut agir sur la vitesse de fluidisation qui provoque une expansion ou un tassement du lit fluidisé, ce qui modifie sa hauteur. Mais, le changement de la hauteur du lit par la variation de la vitesse de fluidisation modifie aussi la densité du lit et il en résulte une variation du coefficient de transfert thermique qui ne se fait pas toujours dans le sens souhaité. On peut encore modifier le degré d'immersion des tubes en pratiquant une charge ou une décharge du lit fluidisé en matériaux inertes pour en faire varier le volume. Mais cette action modifie aussi le temps de séjour dans le lit des particules solides actives, ce qui peut nuire au rendement de la combustion. En outre, quand un échangeur est partiellement immergé dans le lit fluidisé, il subit une forte érosion à la limite supérieure de ce lit. Il est donc avantageux que l'échangeur soit totalement immergé dans le lit fluidisé. Sa construction peut alors être notablement simplifiée.

Il est clair, par conséquent, d'après ce qui précède, qu'il est utile et souhaitable de disposer d'un moyen supplémentaire de régulation de l'énergie thermique échangée avec un lit fluidisé.

Le document US-A-2 674 612 décrit une enceinte contenant un lit fluidisé dans lequel est plongé un enroulement de tubes d'un échangeur de chaleur. A cet échangeur de chaleur interne correspond un échangeur de chaleur externe. Un premier fluide circule en circuit fermé entre ces deux échangeurs et l'échangeur externe est parcouru par un second fluide. Ce second fluide sert soit à soutirer soit à fournir des calories au premier fluide et par conséquent au lit fluidisé. Mais il n'est nullement envisagé de constituer l'échangeur de chaleur externe pour qu'il soit parcouru par le gaz de fluidisation afin qu'une partie des calories puisse être réinjectée dans le lit fluidisé au moyen du gaz de fluidisation lui-même.

L'invention a donc pour but principal d'apporter un procédé et un appareil qui permettent, en supplément aux moyens déjà connus, soit isolément soit en combinaison avec ceux-ci, de réguler l'importance de l'énergie thermique échangée avec un lit fluidisé, principalement mais non exclusivement avec un lit fluidisé de combustion d'un combustible dans un courant d'air de fluidisation.

A partir d'une enceinte de fluidisation contenant un corps en réaction tenu en état de lit fluidisé sous l'effet d'un gaz de fluidisation, avec un échangeur interne de chaleur immergé au moins partiellement dans ce lit fluidisé et parcouru par un fluide caloporteur, selon le procédé de l'invention, on réalise à l'extérieur de ladite enceinte de fluidisation un transfert contrôlé de calories entre le gaz de fluidisation et le fluide caloporteur après le passage de celui-ci à travers l'échangeurs de chaleur interne.

Pour la mise en œuvre du procédé de l'invention à partir d'une installation comprenant une enceinte de fluidisation contenant un corps en réaction à l'état de lit fluidisé, une grille de fluidisation, une canalisation d'arrivée d'un gas de fluidisation dirigé à travers la grille de fluidisation, un échangeur interne immergé en partie au moins dans le lit fluidisé et parcouru par un fluide caloporteur, selon l'invention cette installation comprend encore un dispositif constitué:

a) par un échangeur extérieur de calories alimenté d'une part par la canalisation d'arrivée du gaz de fluidisation, d'autre part par le fluide caloporteur sortant dudit échangeur, et

b) par une canalisation à debit réglable montée en derivant par rapport audit échangeur extérieur.

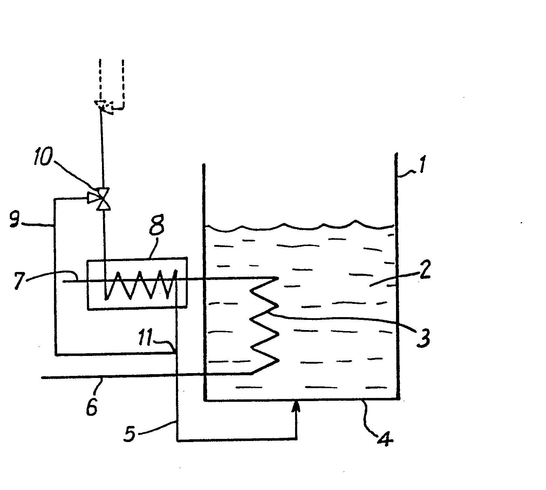

On donnera maintenant, sans intention limitative et sans exclure aucune variante, une description d'un exemple de réalisation de l'invention dans le cas d'une chaudière à combustion en lit fluidisé. On se référera à la figure unique annexée qui est une vue générale schématique montrant principalement les organes essentiels nouveau du dispositif de l'invention.

Une enceinte de fluidisation 1 contient un lit fluidisé 2 dans lequel un échangeur interne de chaleur 3 est immergé en totalité et en permanence pendant l'utilisation. Le lit fluidisé 2 est composé de particules d'un combustible qui parvient dans l'enceinte 1 par des moyens d'alimentation classiques non représentés. Ce lit fluidisé 2 se trouve au-dessus d'une grille de fluidisation 4 à travers laquelle est envoyé un courant d'air de fluidisation servant d'air primaire de combustion qui arrive par une canalisation d'arrivée 5. L'échangeur de chaleur 3 est parcouru par un fluide caloporteur, par exemple de l'eau, qui arrive par une canalisation 6 et qui repart par une canalisation 7.

Un échangeur de chaleur extérieur 8 est placé en dehors de l'enceinte 1; il est situé sur la canalisation 7 en aval de l'échangeur interne 3 pour être traversé de préférence par la totalité du débit du fluide caloporteur qui provient de cet échangeur 3. L'échangeur de chaleur extérieur 8 est situé aussi sur la canalisation 5 d'arrivée d'air de fluidisation. En outre, il existe une canalisation de dérivation 9 qui part d'une vanne de réglage de débit 10 montée sur la canalisation d'arrive 5 en amont de l'échangeur de chaleur extérieur 8 et qui aboutit à un point 11 de cette même canalisation d'arrivée 5, en aval de l'échangeur de chaleur extérieur 8. En pratique ce dernier est d'un type quelconque convenable apte à réaliser un bon transfert thermique entre le fluide caloporteur et le gaz de fluidisation.

De cette façon, on peut réguler à l'aide de moyens connus comme la vanne de réglage 10, la quantité de chaleur soustraite réellement au lit fluidisé 2 en conservant à l'intérieur du lit fluidisé 2 des conditions favorables à une bonne combustion, ainsi que le montrent les chiffres portés sur le tableau qui suit.

Ces chiffres se rapportent à une installation dont la puissance calorifique par unité de surface est de 2 MW/m$^2$ de surface de la grille de fluidisation 4 au régime nominal de marche. La variation de la quantité de chaleur échangée avec le lit fluidisé 2 est supposée devoir être de 50% de la puissance au régime nominal.

| % de la puissance nominale: | 100% | 90% | 80% | 70% | 60% | 50% |
|---|---|---|---|---|---|---|
| soit en MW/m$^2$ | 2 | 1,8 | 1,6 | 1,4 | 1,2 | 1 |
| Puissance extraite par l'échangeur immergé (MW/m$^2$) | 1 | 1 | 1 | 1 | 1 | 1 |
| Puissance à transférer à l'échangeur de chaleur extérieur (MW/m$^2$) | 0 | 0,1 | 0,2 | 0,3 | 0,4 | 0,5 |
| Débit d'air disponible (avec un excès d'air constant) Nm$^3$/h | 3 300 | 3 000 | 2 665 | 2 330 | 2 000 | 1 665 |
| Température de l'air à la sortie de l'échangeur de chaleur extérieur (°C) | 15 | 102 | 210 | 350 | 535 | 795 |

Il ressort de ces chiffres qu'en utilisant l'air de fluidisation comme seul moyen de tranfert de calories dans l'échangeur de chaleur extérieur 8 pour soustraire du fluide caloporteur les calories excédentaires et réintroduire celles-ci dans le lit fluidisé, on peut obtenir facilement un coefficient de souplesse de 1 à 1,42 (soit une régulation de la marche de 70% à 100% du régime nominal), la température de l'air de fluidisation passant de 15° à 350°C. Au-delà, l'échauffement de l'air de fluidisation devient difficile à mettre en œuvre; on peut diluer cet air avec un fluide caloporteur inerte comme les fumées recyclées si l'on veut obtenir une souplesse plus grande; on peut aussi avoir recours à l'un des moyens complémentaires exposés plus haut. Mais le procédé et le dispositif de l'invention procurent un degré de souplesse appréciable susceptible d'être combiné avec d'autre moyens classiques.

**Revendications**

1. Procédé de régulation de l'énergie thermique échangée entre un milieu extérieur et une enceinte de fluidisation contenant un corps en réaction tenu en état de lit fluidisé sous l'effet d'un gaz de fluidisation, avec un échangeur de chaleur interne immergé au moins partiellement dans ce lit fluidisé et parcouru par un fluide caloporteur, caractérisé en ce qu'on réalise à l'extérieur de ladite enceinte de fluidisation un transfert contrôlé de calories entre le gaz de fluidisation et le fluide caloporteur après le passage de celui-ci à travers l'échangeur de chaleur interne.

2. Procédé selon la revendication 1, caractérisé en ce qu'on contrôle le transfert de calories en agissant sur le débit du gaz de fluidisation.

3. Dispositif pour la régulation de l'énergie thermique échangée avec un lit fluidisé, dans une installation comprenant une enceinte de fluidisation (1) contenant un corps en réaction à l'état de lit fluidisé (2), une grille de fluidisation (4), une canalisation d'arrivée (5) d'un gaz de fluidisation dirigé dans le lit fluidisé, un échangeur de chaleur interne (3) immergé en partie au moins à travers la grille de fluidisation (4) parcouru par un fluide caloporteur au moyen d'un circuit d'arrivée (6) et de départ (7), caractérisé en ce qu'il est constitué:

a) par un échangeur extérieur (8) de calories alimenté d'une part par la canalisation d'arrivée (5) du gaz de fluidisation, d'autre part par la canalisation (7) de départ du fluide caloporteur, et

b) par une canalisation (9) à débit réglable montée en dérivation par rapport audit échangeur extérieur (8).

4. Dispositif selon la revendication 3, caractérisé en ce que la canalisation (9) à débit réglable part d'une vanne de réglage de débit (10) montée sur la canalisation d'arrivée (5) du gaz de fluidisation en amont de l'échangeur extérieur (8) et aboutit à un point (11) de cette même canalisation d'arrivée (5) en aval de l'échangeur extérieur (8).


**Patentansprüche**

1. Verfahren zum Steuern der zwischen einer äusseren Umgebung und einer Fliessbettkammer ausgetauschten Energie, wobei letztere einen Körper umfasst, der im Wirbelbettzustand unter dem Einfluss eines Wirbelbettgases in Reaktion gehalten ist, mit einem inneren Wärmeaustauscher, der wenigstens teilweise in dieses Wirbelbett taucht und von einem Wärmeträgerfluid durchströmt wird, dadurch gekennzeichnet, dass ausserhalb dieser Fliessbettkammer ein geregelter Übergang von Wärme zwischen dem Fliessbettgas und dem Wärmeträgerfluid nach dessen Durchgang durch den inneren Wärmeaustauscher vorgenommen wird.

2. Verfahren nach Anspruch 1, dadurch gekennzeichnet, dass man den Wärmeübergang regelt, indem man auf dem Wirbelbettgasdurchgang einwirkt.

3. Vorrichtung zum Steuern der mit einem Wirbelbett ausgetauschten Wärmeenergie in einer eine Wirbelbettkammer (1) umfassenden Anlage, die einen im Fliessbettzustand (2) in Reaktion befindlichen Körper enthält, ein Wirbelbettgitter (4) eine Zuführleitung (5) für ein Wirbelbettgas, in das Fliessbett gerichtet, einen inneren Wärmeaustauscher (3), der zum Teil wenigstens durch das Wirbelbett oder Fliessbettgitter (4) taucht und von einem Wärmeträgerfluid mittels eines Zuführungs- (6) und Abführkreises (7) durchströmt wird, dadurch gekennzeichnet, dass sie besteht aus:

a) einem äusseren Wärmeaustauscher (8), der einerseits über die Zuführleitung (5) mit Wirbelbettgas, andererseits über die Wärmefluidabführleitung (7) gespeist ist und

b) aus einer Leitung (9) mit regelbarem Durchsatz, die im Nebenschluss, bezogen auf den äusseren Wärmeaustauscher (8), liegt.

4. Vorrichtung nach Anspruch 3, dadurch gekennzeichnet, dass die Leitung (9) mit regelbarem Durchsatz von einem Durchsatzregelventil oder Durchsatzregelschieber (10) abgeht, der in der Zuführleitung (5) für das Wirbelbettgas vor dem äusseren Wärmeaustauscher (8) liegt und zu einem Punkt (11) eben dieser Zuführleitung (5) hinter diesem äusseren Wärmeaustauscher (8) führt.


**Claims**

1. Process for regulating the heat energy exchanged between an external medium and a fluidisation container containing a body in reaction which is maintained in the state of a fluidised bed under the action of a fluidisation gas, with an internal heat exchanger which is immersed at least partially in the fluidised bed and through which passes a heat exchange fluid, characterised by producing outside said fluidisation container a controlled transfer of heat between the fluidisation gas and the heat exchange fluid after the latter has passed through the internal heat exchanger.

2. A process according to claim 1, characterised by controlling the transfer of heat by acting on the rate of the fluidisation gas.

3. Apparatus for regulating the heat energy exchanged with a fluidised bed in an installation comprising a fluidisation container (1) containing a body in reaction in the state of a fluidised bed (2), a fluidisation grid (4), a conduit (5) for the feed of a fluidisation gas which is directed into the fluidised bed, an internal heat exchanger (3) which is immersed in part at least through the fluidisation grid (4) and through which passes a heat exchange fluid by means of a feed (6) and discharge (7) circuit, characterised in that it comprises:

a) an external heat exchanger (8) which is fed on the one hand by the conduit (5) for the feed of the fluidisation gas and on the other hand the conduit (7) for discharge of the heat exchange fluid, and

b) a conduit (9) with a controllable flow rate and mounted in bypass relationship with said external exchanger (8).

4. Apparatus according to claim 3 characterised in that the controllable-flow conduit (9) starts from a flow control valve (10) mounted on the conduit (5) for the feed of the fluidisation gas upstream of the external exchanger (8) and terminates at a point (11) on the same feed conduit (5) downstream of the external exchanger (8).